# EUROPEAN PATENT APPLICATION

(11) **EP 3 640 098 A1**
(43) Date of publication of application: **22.04.2020**
(21) Application number: 18818858.5
(22) Date of filing: 29.05.2018
(51) Int. Cl.: B60S 1/18, B60S 1/04

(54) **WIPER DEVICE**

(30) Priority: 13.06.2017 JP 2017116242
(71) Applicant: Denso Wiper Systems, Inc., Kosai-shi Shizuoka 4310493 (JP)
(72) Inventor: SHIRAISHI Yuichi, Kazo-shi Saitama 347-8585 (JP)
(74) Representative: Barker Brettell LLP
(86) International application number: PCT/JP2018/020614
(87) International publication number: WO 2018/230335

(57) **Abstract**

There is provided a wiper device a wiper device for wiping a surface of a window portion of a vehicle with an imaging device disposed adjacent to the window portion, wherein accuracy of image capturing by the imaging device can be improved. A semi-pantograph wiper assembly 2A on a driver's seat side and a wiper assembly 2B on a passenger's seat side are provided on a surface of the window portion 1 of the vehicle. Both of imaging areas 7A, 7B of the imaging device (camera) for driving assistance are disposed within an overlap area 6 in which a wiping area 5A of a wiper blade 3A of the wiper assembly 2A and a wiping area 5B of a wiper blade 3B of the wiper assembly 2B overlap.

## Description

### [Technical Field]

The present invention relates to a wiper device for wiping a window portion, which is provided in a vehicle with an imaging device disposed adjacent to the window portion.

### [Background Art]

There has been provided a vehicle such as an automobile having an imaging device (camera) which is used for driving assistance and is provided adjacent to a window portion (for example, windshield). Specifically, a camera capturing an image in front of the vehicle is disposed on the inner side of the glass surface of the window portion (for example, windshield) so that the driving assistance (assistance in steering etc., display of various types of information, and so on) is carried out on the basis of the image captured by the camera.

In a vehicle with such a camera for driving assistance, dirt on the glass surface of the window portion must be appropriately removed at a position where the camera is disposed in order to improve image-capturing accuracy of the camera. As a prior-art technology to address such a problem, each of Japanese laid-open patent application No. 2015-66128 (Patent Literature 1) and Japanese laid-open patent application No. 2015-66957 (Patent Literature 2) proposes a wiper washer device in which a field of view of an imaging device is kept in a good condition.

### [Citation List]

### [Patent Literature]

Patent Literature 1: Japanese laid-open patent application No. 2015-66128
Patent Literature 2: Japanese laid-open patent application No. 2015-66957

### [Summary of Invention]

### [Technical Problem]

In order to keep a field of view at a position of a window portion where an imaging device is disposed in a better condition, it is necessary to improve efficiency of dirt removal by wiping with a wiping device. Accordingly, it is desirable that a plurality of wiping members wipe elaborately an area of the window portion where a camera is disposed. However, there has been no conventional wiper device that satisfies such a demand.

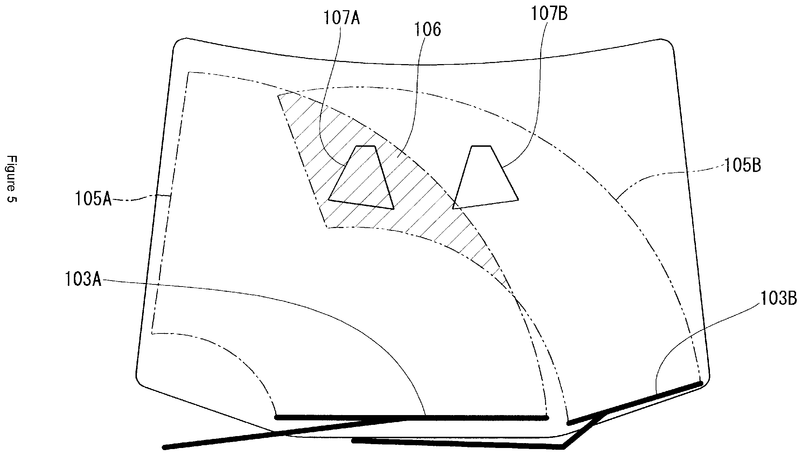

As shown in FIG. 5, a conventional wiper device has an overlapping range 106 where a wiping area 105A of a wiping blade 103A on a driver's seat side and a wiping area 105B of a wiping blade 103B on a passenger's seat side overlap. As the overlapping range 106 is narrow, when two cameras are disposed at predetermined spacing for appropriate image capturing, both of imaging areas 107A,107B (areas each of which are a field of view of a camera) of the two cameras as depicted with hatching in the figure cannot be disposed within the overlapping range 106.

The present invention has been made in view of the foregoing, and it is an object of the present invention to provide a wiper device wiping a surface of a window portion of a vehicle including an imaging device disposed adjacent to the window portion, which can improve accuracy of image capturing by the image device.

### [Solution to Problem]

The present invention provides a wiper device provided on a window portion of a vehicle on which a plurality of imaging devices is disposed, the wiper device comprising a plurality of wiping members for wiping a surface of the window portion, and wherein all of imaging areas of the plurality of imaging devices on the surface of the window portion are wiped by at least two of the plurality of wiping members.

At least one of the wiping areas of the plurality of wiping members may be expanded so that all of the imaging areas of the plurality of imaging devices are wiped by at least two of the plurality of wiping members while the plurality of imaging device are disposed with spacing necessary for image capturing.

At least one of the plurality of wiping members may be supported by a support member which can change an angle of the wiping member with respect to the support member depending on a position to be wiped.

At least one of the plurality of wiping members may be supported by a support member having a 4-link mechanism.

The wiper device may comprise a pair of the wiping members disposed on both sides of the surface of the window portion, as the plurality of wiping members.

One of the pair of wiping members may be configured to move in a range from a left end to a right part of a lower end of the surface of the window portion, while the other of the pair of wiping members is configured to move in a range from a right end to a left part of the lower end of the surface of the window portion.

One of the pair of wiping members may be configured to move in a range from a middle part of an upper end to a left end of the surface of the window portion, while the other of the pair of wiping members is configured to move in a range from the middle part of the upper end to a right end of the surface of the window portion.

### [Advantageous Effects of Invention]

According to the wiper device of the present invention, all of imaging areas (imaging areas 7A and 7B, 27A and 27B, or 37A and 37B, for example), each of which is a field of view of an imaging device (camera, for example), in a window portion (window portion 1, for example) are wiped by at least two (that is two or more) of a plurality of wiping members (wiper blades 3A and 3B, 13A and 13B, 23A and 23B, or 33A and 33B, for example). That is, all of the imaging areas are disposed in an overlap area (overlap area 6, 16, 26, or 36, for example) where wiping areas (wiping areas 5A and 5B, 15A and 15B, 25A and 25B, or 35A and 35B, for example) of at least two of the plurality of wiping members overlap. Therefore, all of the imaging areas are wiped by two or more wiping members. Accordingly, all of the imaging areas are wiped without omission, and the field of view in the imaging areas is kept clear. Consequently, the accuracy of image capturing by the imaging device is improved so that it possible to carry out driving assistance and so on appropriately through the use of the imaging device.

If the wiping area of at least one of the plurality of wiping members is expanded, for example, by supporting at least one of the plurality of wiping members (wiper blade 3A, for example) by means of a (so-called semi-pantograph type) support member (wiper arm 4A, for example) which is capable of changing an angle of the wiping member with respect to the support member in accordance with a position to be wiped or by supporting at least one of the plurality of wiping members (wiper blade 13A, for example) by means of a support member (wiper arm 14A, for example) having a 4-link mechanism, the wide overlap area (overlap area 6 or 16, for example) wiped by means of the plurality of wiping members can be secured. Therefore, a plurality of imaging devices may be disposed in the overlap area with spacing necessary for appropriate image capturing.

If a pair of the wiping members (wiper blades 23A and 23B or 33A and 33b, for example) is adopted as the plurality of wiping members and is disposed on both sides (left end 1A and right end 1B) of a surface of the window portion, the wide overlap area (overlap area 26 or 36, for example) wiped by means of the wiping members on both sides can be secured in the vicinity of a middle part of a windshield. Therefore, the plurality of imaging devices can be disposed in the wide overlap area with a high flexibility. This allows appropriate image capturing.

If one of the pair of wiping members (wiper blade 23A, for example) is configured to move in a range from the left end to the right part of the lower end of the surface of the window portion while the other of the pair of wiping members (wiper blade 23B, for example) is configured to move in a range from a right end to a left part of the lower end of the surface of the window portion, the very wide overlap area (overlap area 26) can be formed in the vicinity of the middle part of the surface of the window portion. Thus, the flexibility in positioning the imaging device is extremely improved.

If one of the pair of wiping members (wiper blade 33A, for example) is configured to move in a range from the middle part of the upper end to the left end of the surface of the window portion while the other of the pair of wiping members (wiper blade 33B, for example) is configured to move in an area from the middle part of the upper end to the right end of the surface of the window portion, the overlap area (overlap area 36) may be formed in proximity to the upper end (upper end 1C, for example) of the surface of the window portion. Thus, it is possible to dispose the imaging device at a position in proximity to the upper end of the middle of the surface of the window portion.

### [Brief Description of Drawings]

[Figure 1] Fig. 1 is an explanatory diagram illustrating wiping of the window portion by a wiper device according to a first embodiment of the present invention.
[Figure 2] Fig. 2 is an explanatory diagram illustrating wiping of the window portion by a wiper device according to a second embodiment of the present invention.
[Figure 3] Fig. 3 is an explanatory diagram illustrating wiping of the window portion by a wiper device according to a third embodiment of the present invention.
[Figure 4] Fig. 4 is an explanatory diagram illustrating wiping of the window portion by a wiper device according to a fourth embodiment of the present invention.
[Figure 5] Fig. 5 is an explanatory diagram illustrating wiping of the window portion by a prior-art wiper device.

### [Description of Embodiments]

The present invention will now be described with reference to the accompanying drawings.

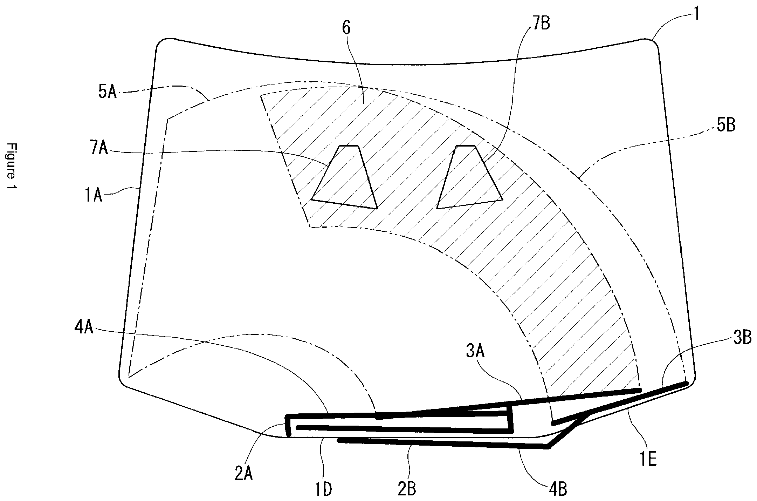

FIG. 1 is an explanatory diagram illustrating wiping of a window portion by a wiper device of a first embodiment of the present invention. As shown, two wiper assemblies 2A and 2B are disposed on a glass surface of a window portion 1 (windshield, for example) of a vehicle. The wiper assemblies 2A, 2B includes wiper blades 3A, 3B as wiping members and wiper arms 4A, 4B supporting the wiper blades 3A, 3B, respectively. The wiper arms 4A and 4B are linked through a driving means (drive motor), which is not illustrated. The wiper blades 3A and 3B are thus configured to be driven by the driving means via the wiper arms 4A and 4B to move along the window portion 1 to wipe the window portion 1.

As shown, the wiper assemblies 2A and 2B are disposed in parallel while each of the wiper blades 3A and 3B are configured to be driven in the same direction from a right part 1E of a lower end 1D toward a left end 1A of the window portion 1 (so-called tandem type wiper).

The wiper assembly 2A (wiper blade 3A) is disposed on a left side (when viewed from a vehicle front side) of the window portion 1 (driver's seat side) with respect to the wiper assembly 2B (wiper blade 3B) and is configured to be reciprocated in a range from the right part 1E of the lower end to the left end 1A to wipe the wiping area 5A. As a so-called semi-pantograph type wiper is adopted as the wiper assembly 2A, the wiping area 5A wider than that of a usual wiper can be wiped by changing the angle of the wiper blade 3A in accordance with a position to be wiped.

On the other hand, the wiper assembly 2B (wiper blade 3B) is disposed on a right side (passenger's seat side) with respect to the wiper assembly 2A (wiper blade 3A). The wiper blade 3B is shorter than the wiper blade 3A and is configured to wipe, in a supplementary manner, a narrow wiping area 5B that is offset to the right with respect to the wiping area 5A of the wiper blade 3A.

With this construction, the overlap area 6 (depicted with hatching in the figure) in which the wiping areas 5A and 5B of the wiper blades 3A and 3B overlap is created on the window portion 1. In the present embodiment, as the wiper assembly 2A is the semi-pantograph type wiper having a wide wiping area, the overlap area 6 can be created to have a sufficiently wide area.

On the window portion 1, two cameras (not illustrated) as imaging devices are disposed adjacent to each other with an appropriate space therebetween. The cameras are disposed inside of a compartment with respect to the window portion 1 and capture images of scenes in front of the vehicle through the window portion 1. Information captured by the camera is used for driving assistance of the vehicle (steering control, presentation of the information to a driver, and so on).

Imaging areas 7A and 7B are areas which are included within fields of view of the corresponding cameras (areas through which the light reaching the cameras passes during image capturing). The entire of each of the imaging areas 7A and 7B is disposed within the overlap area 6. That is, the imaging areas 7A and 7B are to be wiped by both of the two wiper blades 3A and 3B. Therefore, the imaging areas 7A and 7B are wiped more elaborately than a case where they are wiped only by one wiping assembly. Consequently, dirt in the imaging areas 7A and 7B on the window portion 1 is certainly removed so that the accuracy of image capturing by the cameras can be improved.

As described above, the wiper device of the present embodiment employs the semi-pantograph type wiper as the wiper assembly 2A so that the overlap area 6 has a wider area than that of a prior-art wiper device (see FIG. 5, for example). Accordingly, even if the two cameras are disposed with spacing necessary for appropriate image capturing, the cameras can be accommodated within the imaging areas 7A and 7B without difficulty. In addition, as the imaging areas 7A and 7B may be disposed in the wide overlap area 6, the flexibility in positioning the two cameras is improved.

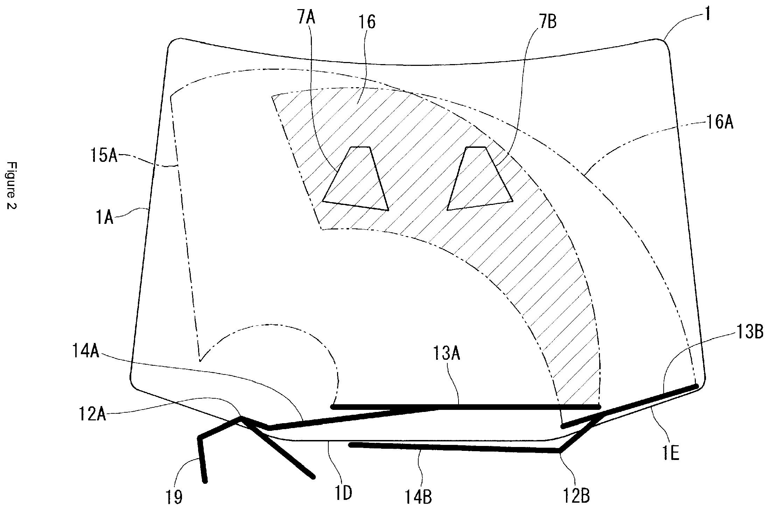

FIG. 2 illustrates wiping of the window portion by a wiper device of a second embodiment of the present invention. As shown, the wiper device of the present embodiment differs from the wiper device of the first embodiment only in that the former employs a 4-link type wiper as a wiper assembly 12A on the driver's seat side. For example, a wiper assembly 12B of the preset embodiment has the same configuration as that of the wiper assembly 2B of the first embodiment. The wiper assembly 12B includes a short wiper blade 13B and a wiper arm 14B that supports the wiper blade 13B and is configured to wipe the right side with respect to the wiper assembly 12A in a supplementary manner. Accordingly, in the present embodiment, the same configurations as those of the first embodiment other than the wiper assembly 12A are denoted by the same reference numerals, and description thereof is omitted.

According to the present embodiment, a wiping area 15A of a wiper blade 13A for the 4-link type wiper assembly 12A is widened to the right and left due to the function of a 4-link mechanism 19 provided on a base end part of a wiper arm 14A. Therefore, an overlap area 16 (depicted with hatching in the figure) of the wiping area 15A of the wiper assembly 12A and a wiping area 15B of the wiper assembly 12B on the passenger's seat side has sufficient size so that the imaging areas 7A and 7B of the two cameras can be disposed within the overlap area 16.

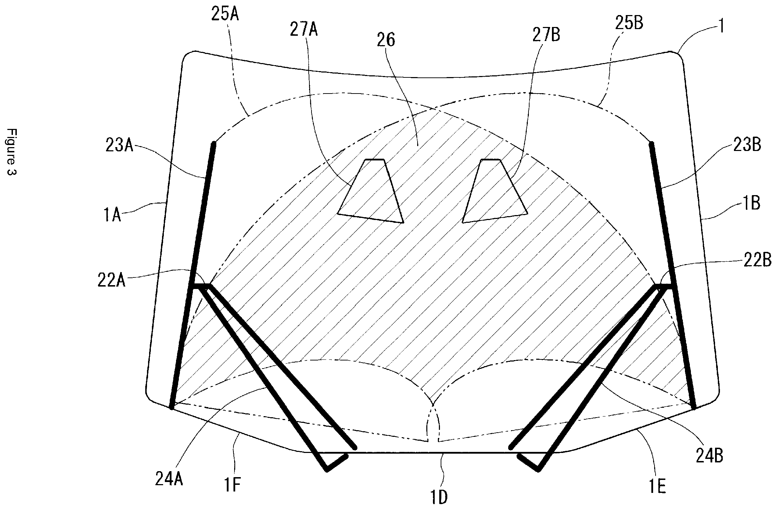

FIG. 3 illustrates wiping of the window portion by a wiper device of a third embodiment of the present invention. As shown, in the present embodiment, two wiper assemblies 22A and 22B of opposed type (i.e., they move in an opposite direction to each other) are disposed on both right and left sides (driver's seat side and passenger's seat side) of the window portion 1. The wiper assembly 22A, 22B include wiper blades 23A, 23B and wiper arms 24A, 24B supporting the wiper blades 23A, 23B, respectively.

The wiper blade 23A of the wiper assembly 22A on the driver's seat side (left side when viewed from the vehicle front side) is reciprocated in a range from the left end 1A to the right part 1E of the lower end 1D of the window portion 1 to wipe a wiping area 25A. On the other hand, the wiper blade 23B of the wiper assembly 22B on the passenger's seat side (right side when viewed from the vehicle front side) is reciprocated in a range from a right end 1B to a left part IF of the lower end 1D of the window portion 1B to wipe a wiping area 25B. The movements of wiper assembly 22A and 22B are performed alternately by delaying timing so that they do not interfere with each other.

With this construction, a very wide overlap area 26 (depicted by hatching in the figure) which is wiped by means of both of the wiper blades 23A and 23B is formed in the vicinity of the middle of the window portion 1. Imaging areas 27A and 27B of the two cameras are disposed in the overlap area 26.

As described above, in the present embodiment, the wiper assemblies 22A, 22B are configured to move from the right and left ends (left end 1A, right end 1B) of the window portion 1 to opposite parts (right part 1E of the lower end, the left part IF of the lower end) of the lower end 1D of the window portion 1, respectively. Thus, the overlap area 26 where the wiping areas 25A and 25B overlap can be a very wide area in the vicinity of the middle part of the window 1. Therefore, the imaging areas 27A and 27B can be disposed within the wide area in the vicinity of the middle part of the window portion 1 so as to highly improve the flexibility in positioning the cameras.

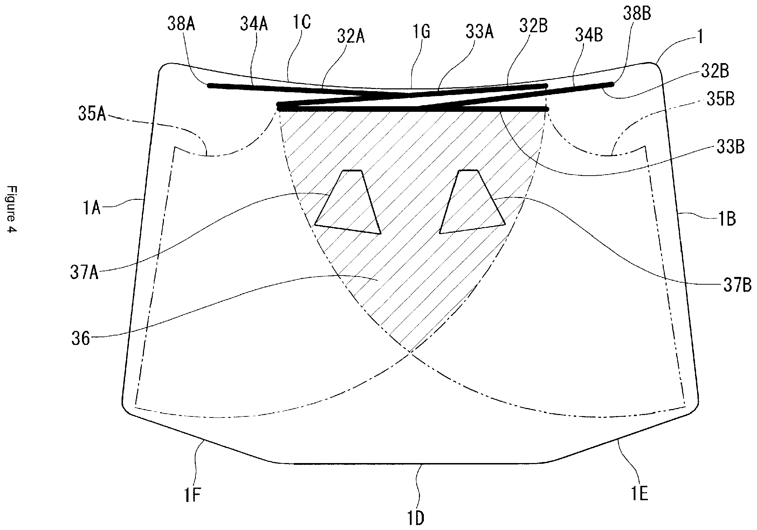

FIG. 4 illustrates wiping of the window portion by a wiper device of a fourth embodiment of the present invention. As shown, wiper assemblies 32A, 32B are used in the present embodiment. Wiper blades 33A, 33B of the wiper assemblies 32A, 32B in their initial positions are disposed sideways on a middle part 1G of an upper end 1C of the window portion 1. On the other hand, wiper arms 34A, 34B of the wiper assemblies 32A, 32B in their initial positions are disposed to extend right and left along the upper end 1C of the window portion 1 so that proximal end parts 38A, 38B (fulcrums for rotation) linked to the driving means are oriented toward the left end 1A and the right end 1B of the window portion 1, respectively.

With this construction, the wiper blade 33A is reciprocated in a range from the middle part 1G of the upper end to the left end 1A of the window portion 1 to wipe a wiping area 35A. On the other hand, the wiper blade 33B is reciprocated in a range from the middle part 1G of the upper end to the right end 1B of the window portion 1 to wipe a wiping area 35B. Accordingly, an overlap area 36B where the wiping areas 35A and 35B overlap is formed in proximity to the upper end 1C of the right and left middle parts of the window portion 1. The imaging areas 37A and 37B of the two cameras can be disposed in the overlap area 36. Therefore, this configuration makes it possible to dispose the cameras in proximity to the upper end 1C of the window portion 1.

Although the embodiments of the present invention have been described above, each of the forgoing embodiments is exemplary and the scope of the present invention is not limited to the embodiments. For example, in each of the forgoing embodiments, the imaging areas of the two cameras are wiped by means of two wiping members, but the number of the cameras and the number of wiping members are not particularly limited. It is also possible to employ a configuration in which three or more wiping members wipe three or more imaging areas.

Also, in each of the embodiments, the terms "left" and "right" are used for convenience of explanation, but the present invention is not limited by these terms. It is also possible to employ a configuration, for example, in which the left and the right are reversed in compared with each of the foregoing embodiments. In addition, the expressions "driver's seat side" and "passenger's seat side" in each of the foregoing embodiments are also for convenience of explanation and not intended to limit the present invention. For example, a configuration in which the driver's seat side and the passenger's seat side are reversed and so on is also encompassed within the technical scope of the present invention.

### [List of Reference Numerals]

- 1: window portion (windshield)
- 1A: left end of window portion
- 1B: right end of window portion
- 1C: upper end of window portion
- 1D: lower end of window portion
- 1E: right side part of lower end of window portion
- 1F: left side part of lower end of window portion
- 1G: middle part of upper end of window portion
- 2A, 2B: wiper assembly
- 3A, 3B: wiper blade
- 4A, 4B: wiper arm
- 5A, 5B: wiping area
- 6: overlap area
- 7A, 7B: imaging area
- 12A, 12B: wiper assembly
- 13A, 13B: wiper blade
- 14A, 14B: wiper arm
- 15A, 15B: wiping area
- 16: overlap area
- 19: 4-link mechanism
- 22A, 22B: wiper assembly
- 23A, 23B: wiper blade
- 24A, 24B: wiper arm
- 25A, 25B: wiping area
- 26: overlap area
- 27A, 27B: imaging area
- 32A, 32B: wiper assembly
- 33A, 33B: wiper blade
- 34A, 34B: wiper arm
- 35A, 35B: wiping area
- 36: overlap area
- 37A, 37B: imaging area
- 38A, 38B: proximal end of wiper arm

## Claims

1. A wiper device provided on a window portion of a vehicle on which a plurality of imaging devices is disposed,
the wiper device comprising a plurality of wiping members for wiping a surface of the window portion, and
wherein all of imaging areas of the plurality of imaging devices on the surface of the window portion are wiped by at least two of the plurality of wiping members.

2. The wiper device according to claim 1, wherein at least one of the wiping areas of the plurality of wiping members is expanded so that all of the imaging areas of the plurality of imaging devices are wiped by at least two of the plurality of wiping members while the plurality of imaging device are disposed with spacing necessary for image capturing.

3. The wiper device according to claim 2, wherein at least one of the plurality of wiping members is supported by a support member which can change an angle of the wiping member with respect to the support member depending on a position to be wiped.

4. The wiper device according to claim 1, wherein at least one of the plurality of wiping members is supported by a support member having a 4-link mechanism.

5. The wiper device according to claim 1, comprising a pair of the wiping members disposed on both sides of the surface of the window portion, as the plurality of wiping members.

6. The wiper device according to claim 5, wherein one of the pair of wiping members is configured to move in a range from a left end to a right part of a lower end of the surface of the window portion, while the other of the pair of wiping members is configured to move in a range from a right end to a left part of the lower end of the surface of the window portion.

7. The wiper device according to claim 5, wherein one of the pair of wiping members is configured to move in a range from a middle part of an upper end to a left end of the surface of the window portion, while the other of the pair of wiping members is configured to move in a range from the middle part of the upper end to a right end of the surface of the window portion.
